# EUROPEAN PATENT APPLICATION

(11) **EP 0 824 868 A1**
(43) Date of publication of application: **25.02.1998**
(21) Application number: 97114550.3
(22) Date of filing: 22.08.1997
(51) Int. Cl.: A22C 25/00, A23B 4/052

(54) **Method and system for preparing a ready-to-use fish product and thus prepared fish product**

(30) Priority: 22.08.1996 NL 1003848
(71) Applicant: Fa. C. Bond & Zn. Import-Export Visgroothandel/rokerij, 4817 BL Breda (NL)
(72) Inventor: Bond, Henricus Adrianus Josef Maria, 4836 AH Breda (NL)
(74) Representative: Bartelds, Erik

(57) **Abstract**

The invention relates to a method for preparing a ready-to-use fish product, comprising the steps of pretreating the fish, smoking the pretreated fish, cutting the smoked fish into ready-to-use products and freezing and packing the cut fish products, wherein during smoking the fish is heated to a cooking temperature. After thawing out the thus prepared fish product it may be served without further preparation, ready for consumption. During preparation thereof the cooked fish may already be cut into so-called single bite servings.

The invention further relates to a system for performing this method. Such a system comprises a pretreatment station, a smoking station arranged in series therewith, a cutting station arranged in series with the smoking station, a freezing station arranged in series therewith, and a packing station arranged in series with the freezing station, with the smoking station comprising means for heating the fish to a cooking temperature. The cutting station may comprise a cutting device having one or more movably driven cutting members, for instance a plurality of parallel rotatable cutting members, between which wiping members may be arranged.

## Description

The invention relates to a method for preparing a ready-to-use fish product, comprising the steps of pretreating the fish, smoking the pretreated fish, cutting the smoked fish into ready-to-use products and freezing and packing the cut fish products. Such a method is generally known, and is specifically used for preparing so-called "instant" products of fish varieties that are suitable for consumption in raw or cold-smoked form, such as salmon, eel and trout. Such fish products only have to be thawed out and possibly cut into small servings by the consumer before they can be eaten.

The known method is further used for preparing deep-freeze products of other fish varieties, which are not suitable for consumption when raw or cold-smoked. After thawing out, these products have to be fried, cooked or finished in other ways by the consumer, after which they generally also have to be divided into small servings before they may be eaten.

The invention now has for its object to adapt the method described above in such manner that a fish product that is prepared by this method may be offered ready for serving and ready for consumption, and does not require any finishing by the consumer, even when the fish variety is not fit for consumption in raw or cold-cooked state. After thawing out the product should further come close to a freshly cooked and cut product in terms of both appearance and taste, and should not contain any indication that it is a frozen and packed product. In accordance with the invention, this is accomplished in that during smoking the fish is heated to a cooking temperature. After having been thawed out, the fish product that is thus prepared may be served ready for consumption without cooking, finishing, further frying, smoking and/or heating, therefore generally without any further treatment.

Preferably, the cooked fish is cut into so-called single bite servings. In this way it is ensured that the fish product does not have to be reduced in size any further by the consumer, and may thus in principle be served straight from the packaging. It is further preferred that various kinds of fish are prepared separately and packed together. In this way varied instant fish dishes may be offered.

Further preferred variations of the method according to the invention are described in the dependent claims 2-5 and 7.

The invention also relates to a system for performing the above described method. A conventional system for preparing cold-smoked fish products comprises a pretreatment station, a smoking station arranged in series therewith, a cutting station arranged in series with the smoking station, a freezing station arranged in series therewith, and a packing station arranged in series with the freezing station. The system according to the present invention is distinguished from this known system in that the smoking station comprises means for heating the fish to a cooking temperature. In this way a ready for use fish product may easily be prepared.

In a preferred embodiment, the cutting station comprises a cutting device having at least one movably driven cutting member. By using a cutting member that is movably driven, the cooked flesh of the fish, which has a relatively low consistency may be sharply cut, without reducing the flesh of the fish to a shapeless mass. A high production capacity may be achieved when the cutting device comprises a plurality of parallel rotatable cutting members and wiping members arranged therebetween.

Finally, the invention relates to a ready-to-use fish product, that has apparently been prepared by using the method as described above.

The invention is illustrated by means of an example, with reference being made to the drawing, in which:
fig. 1 shows a flow chart illustrating the various steps of the method according to the invention,
fig. 2 is a perspective view of an original product in the shape of a fillet, a part of which is divided into blocks, and
fig. 3 is a perspective view of the cutting station of the system in accordance with the invention.

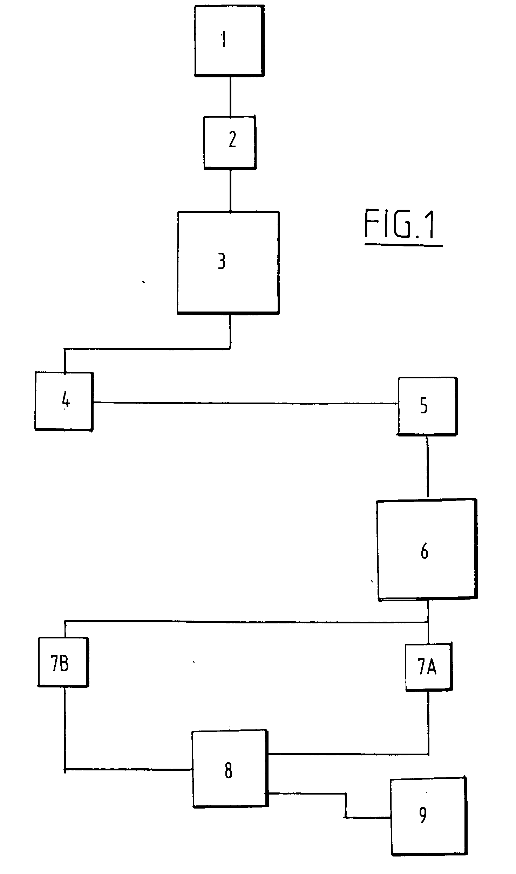

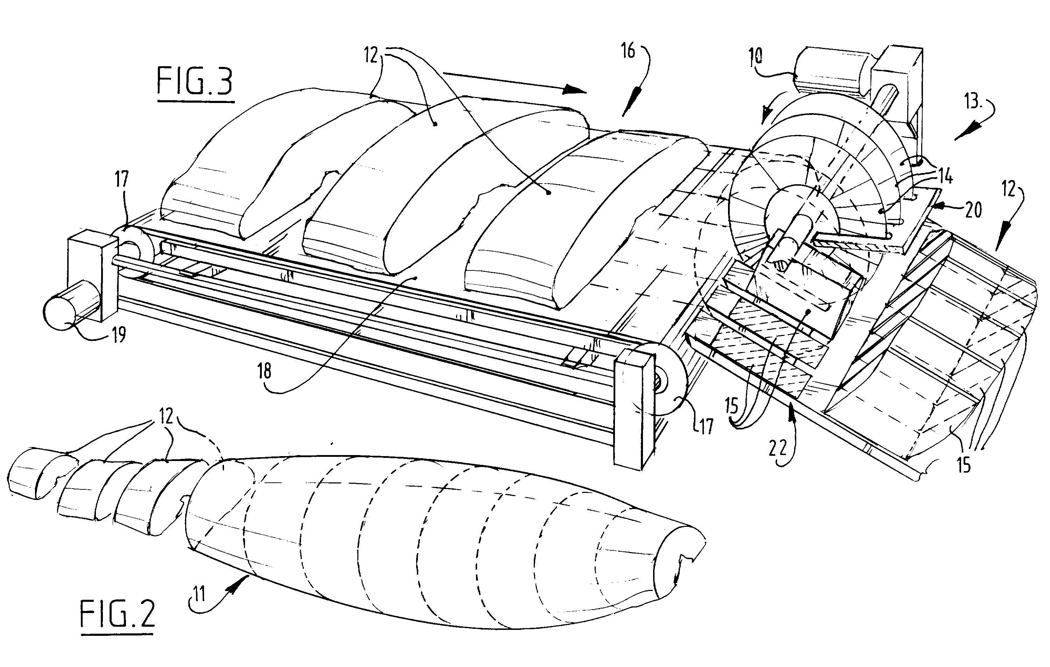

For preparing a ready-to-use fish product according to the invention a fish in the state in which it is supplied from the fish market is used as point of departure. This fish 11 (fig. 2), in the present example a salmon, is pretreated, for instance filleted and divided into blocks 12 in a first station (fig. 1, block 1). During these treatments the fish is of course still raw, so that the flesh of the fish has a robust consistency, and may therefore be easily cut. Consequently a first preservation treatment is performed on the blocks 12 thus obtained, for instance by introducing them into a 1:10 solution of salt or brine for 20 minutes (block 2).

Then the thus salted or pickled blocks of fillet are transferred to a smoking station and smoked there (block 3). In accordance with the invention, the blocks are heated to their cooking temperature during this smoking treatment, so that the fish product that is eventually formed is immediately ready for consumption. In the illustrated embodiment the smoking comprises a number of phases; in a first phase the blocks of fish are dried during for instance approximately 2 hours at a temperature of the order of 30° C. After that, the first real smoking treatment takes place, in which the blocks of fillet are smoked for about 30 minutes at a temperature of the order of 40° C. Then the blocks are dried again, for instance during approximately 30 minutes at a temperature of about 50° C, after which in the next phase the fish is smoked again. This smoking takes approximately 15 minutes, at a temperature which is about 55° C. Finally, in the last phase of the smoking process the blocks are cooked. To this end they are subjected to a smoking treatment at a temperature of the order of about 75° C for approximately 20 minutes.

Before the cooked blocks 12 may now be further reduced in size into ready-to-use, finger-sized or "single bite" servings, the flesh of the fish has to be cooled down. To this end the cooked blocks are transferred to a cooling station, where they are cooled down to temperature about freezing point (block 4). At the temperature of about 0 to 5° C which is reached in this way the blocks are soft and juicy, so that they may well be cut.

The cooked and cooled fillets as prepared for cutting are assembled and grouped (block 5) before being supplied to the cutting station. In the cutting station (block 6) the skin is first stripped off the fillets (manually, in the illustrated embodiment), after which the blocks are mechanically cut into relatively small, finger-sized or "single bite" servings. During cutting each fillet is held together by its smoking layer, that is the "tanned" layer that is formed by drying and smoking. The servings formed by cutting, which in principle are suitable for immediate consumption are then sorted and weighed. After that the servings are grouped. When the product is meant to be marketed as a single product, the servings are grouped according to their variety (block 7A), whereas it is further also possible to offer the product in an assortment packaging. In that case servings of different fish varieties are brought together (block 7B).

Finally the grouped products are transferred to a freezing station and frozen there, for instance by means of so-called circulation freezing, wherein the products are exposed to a temperature of the order of 40° C for about 20 minutes (block 8). The frozen products are then packed in a packing station, for instance in a vacuum formed packaging under partial vacuum (block 9).

Cutting of the fillets in the cutting station is performed by means of a specially developed cutting device 13 (fig. 3). In accordance with the invention this cutting device is provided with a movably driven cutting member. In the illustrated embodiment the cutting device has a plurality of parallel rotatable cutting members 14 that are driven by a motor 10. The mutual distance of the cutting members is adjustable (by a mechanism that is not shown here) depending on the desired dimensions of the "single bite" fillet pieces 15. The cutting device 13 further comprises supply means, in the illustrated embodiment in the shape of a belt conveyor 16, which is constituted by an endless belt 18 that is wound around two end rollers 17. One of the end rollers 17 is driven by a motor 19. The cutting members 14 are arranged over the belt conveyor 16 at such a height that the blocks 12 are just completely cut.

The product tends to stick to the rotating cutting members 14 during cutting, and would thus be continuously rotated along between the cutting members, and eventually be reduced to a shapeless mass. To prevent this from happening suitably configured and dimensioned wiping members or "blocking fingers" 20 are placed between the cutting members 14. Thereby the finger-sized cut pieces 15 are blocked, so that they are released from the blades of the cutting members 14 and are dropped on a discharge strip 22. From this discharge strip the pieces 15 which have been cut to the desired dimensions are finally discharged to a next treatment station, for instance by means of a further belt conveyor. The shape, position and thickness of the wiping members 20 which are required for a certain fish variety may be determined by the skilled person through experiments. The same goes for the rotational speed, mutual distance and shape of the blades of the cutting members 14.

The method and system according to the invention allow hot-smoked fish to be cut into manageable consistent slices, which keep their shape and taste, even after freezing and thawing out. In this way it is possible to provide a deep-freeze packaging including an assortment of various smoked articles, possibly with a sauce added, which are instantly ready for consumption after being thawed out. Fish varieties which are suited to the use of this method include salmon, mackerel, halibut, herring, trout, hake, cod, pollack, tuna and eel.

Although the invention has been illustrated above by way of an exemplary embodiment, the skilled person will appreciate that it is not limited thereto. The various cited values for the temperatures and durations of the treatments may for instance be varied, depending on the kind of fish being treated, the required measure of treatment and the desired dimensions of the finished products. Furthermore, certain steps in the treatment may be skipped. It is for instance possible that after cutting the fish products are not frozen, but simply cooled and packed, and are offered as daily fresh products having all the advantages of the ready-to-use product. It is also possible to mechanically carry out certain steps of the treatment which are performed manually in the illustrated embodiment, or to replace the mechanical cutting operation by a manual operation.

The scope of the invention is therefore exclusively determined by the annexed claims.

## Claims

1. A method for preparing a ready-to-use fish product, comprising the steps of pretreating the fish, smoking the pretreated fish, cutting the smoked fish into ready-to-use products and freezing and packing the cut fish products, **characterized in that** during smoking the fish is heated to a cooking temperature.

2. The method as claimed in claim 1, **characterized in that** during smoking the fish is heated to a temperature of at least 50° C.

3. The method as claimed in claim 2, **characterized in that** during smoking the fish is heated to a temperature of at least 60° C and preferably to a temperature of at least 75° C.

4. The method as claimed in any one of the preceding claims, **characterized in that** after smoking the fish is cooled to a temperature of at most 15° C.

5. The method as claimed in claim 4, **characterized in that** after smoking the fish is cooled to a temperature about freezing point.

6. The method as claimed in any one of the preceding claims, **characterized in that** the cooked fish is cut into so-called single bite servings.

7. The method as claimed in any one of the preceding claims, **characterized in that** at least cutting of the cooked fish is performed mechanically.

8. The method as claimed in any one of the preceding claims, **characterized in that** various kinds of fish are prepared separately and packed together.

9. A system for performing the method as claimed in any one of the preceding claims, comprising a pretreatment station, a smoking station arranged in series therewith, a cutting station arranged in series with the smoking station, a freezing station arranged in series therewith, and a packing station arranged in series with the freezing station, **characterized in that** the smoking station comprises means for heating the fish to a cooking temperature.

10. The system as claimed in claim 9, **characterized in that** a cooling station is arranged between the smoking station and the cutting station.

11. The system as claimed in claim 9 or 10, **characterized in that** the cutting station comprises a cutting device having at least one movably driven cutting member.

12. The system as claimed in claim 9, **characterized in that** the cutting device comprises a plurality of parallel rotatable cutting members and wiping members arranged therebetween.

13. Ready-to-use fish product, apparently prepared by using the method as claimed in any one of claims 1-8.
